Europäisches Patentamt

(19) European Patent Office

Office européen des brevets

(11) EP 0 696 488 B1

(12) EUROPEAN PATENT SPECIFICATION

(45) Date of publication and mention
of the grant of the patent:
10.06.1998 Bulletin 1998/24

(51) Int. Cl.⁶: $B23H\ 1/02$

(21) Application number: 95305630.6

(22) Date of filing: 11.08.1995

(54) **A power supply apparatus for electrical discharge machining and an electrical discharge interval control method using the power supply apparatus**

Stromversorgungsvorrichtung für Funkenerosionsmaschine und Entladungsintervallsteuerungsverfahren für eine Maschine mit dieser Stromversorgungsvorrichtung

Alimentation pour machine d'usinage par électroérosion et méthode pour contrôler l'intervalle de la décharge sur une machine ayant une telle alimentation

(84) Designated Contracting States:
CH DE LI

(30) Priority: 12.08.1994 JP 210749/94

(43) Date of publication of application:
14.02.1996 Bulletin 1996/07

(73) Proprietor: FANUC LTD.
Minamitsuru-gun, Yamanashi 401-05 (JP)

(72) Inventors:
• Murai, Masao,
Room 10-103
Minamitsuru-gun, Yamanashi, 401-05 (JP)
• Sakurai, Akihiro,
FANUC Dai3virakaramatsu, 3527-1
Yamanashi, 401-05 (JP)
• Kawahara, Akiyoshi,
Room 6-110
Minamitsuru-gun, Yamanashi, 401-05 (JP)

(74) Representative:
Billington, Lawrence Emlyn et al
Haseltine Lake & Co.,
Imperial House,
15-19 Kingsway
London WC2B 6UD (GB)

(56) References cited:
WO-A-89/07503

## Description

The present invention relates to a power supply apparatus for electrical discharge machining used for example for profiling electrical discharge machining or wire-cut electrical discharge machining, and an electrical discharge interval control method using the power supply apparatus.

In electrical discharge machining, electrical discharge machining energy is supplied intermittently between an electrode and a workpiece (hereinafter referred to as "between interelectrodes") by means of a power supply apparatus for electrical discharge machining. A period (i.e., one electrical discharge repetition cycle) which elapses from the instant that the supply of the electrical discharge machining energy between the electrodes is started until the next electrical discharge machining energy supply is started includes (1) an electrical discharge delay time, that is, a time lag between the start of power supply between the electrodes and the start of actual occurrence of an electrical discharge phenomenon, (2) an electrical discharge time, that is, a time interval between the start of an actual electrical discharge and the start of the disconnection of the power supply between the electrodes and (3) a downtime, that is, a time during which the power supply is being disconnected between the electrodes.

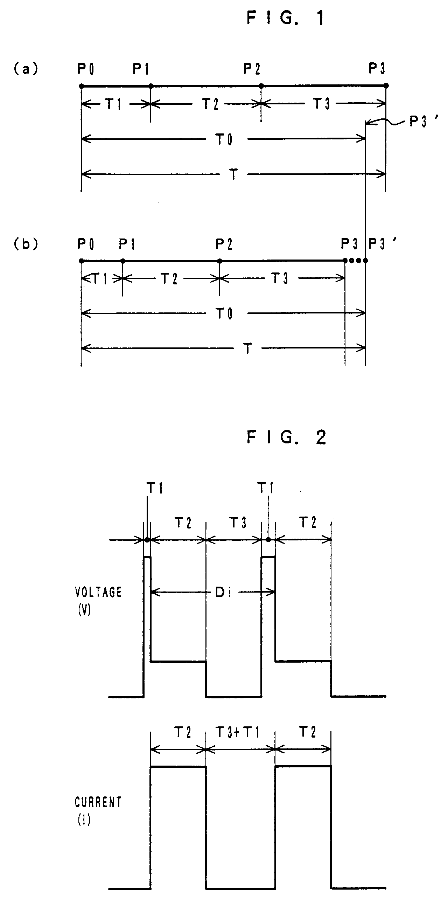

In Fig. 2, T1, T2 and T3 designate the electrical discharge delay time, electrical discharge time, and downtime, respectively. Thus, T1 + T2 + T3 = T (electrical discharge repetition cycle).

The electrical discharge delay time T1 is a time which is required mainly for dielectric breakdown between electrodes. Therefore, the time T1 is settled automatically depending on the state between the electrodes, and cannot be controlled directly from the electrical discharge machining apparatus side. On the other hand, the electrical discharge time T2, during which insulation between electrodes is broken to allow machining current to flow, and the downtime T3, which is secured to recover insulation for the next stroke of electrical discharge and for the return of a machining fluid between the electrodes, etc., can be set and controlled by the machining apparatus.

Mention of the various times involved in a discharge cycle of an electrical discharge machining apparatus having a wire electrode, can be found in WO-A-89/07503.

If one stroke of electrical discharge is followed immediately by another stroke, that is, if the time interval (electrical discharge interval or interval Di shown in Fig. 2) between two consecutive strokes of electrical discharge is too short, the next stroke of electrical discharge is started without fully recovering insulation after the preceding stroke. If the next stroke of electrical discharge is commenced with insufficient insulation, points of electrical discharge are liable to be concentrated, thereby tending to cause poorly finished work surface, wire electrode break, etc.

Therefore, the downtime T3 maybe adjusted to secure an appropriate electrical discharge interval Di. The electrical discharge interval Di is equal to the sum of the electrical discharge time T2 and the downtime T3 (in the present electrical discharge repetition cycle) and the electrical discharge delay time T1 (in the next electrical discharge repetition cycle). Even when the state of electrical discharge is stable, however, the electrical discharge delay time T1 is apt to vary or unlikely to take a stable constant value. In order to secure a sufficient electrical discharge interval Di at all times despite insufficient electrical discharge time T1, therefore, normally, the adjustable downtime T3 is set to a relatively large value including the allowance for safety.

When the electrical discharge delay time T1 is long, however, the electrical discharge interval Di becomes too long, causing the reduction of the machining speed.

As another method of controlling the electrical discharge interval Di there may be proposed a method such that the -voltage applied between the electrodes is made variable to different levels, and a high voltage is applied forcibly to break insulation, thereby generating electrical discharge, when electrical discharge has not occurred even after a certain period of time. According to this method, however, there is a problem such that the electrical discharge interval Di cannot be controlled in the case where the electrical discharge delay time T1 is too short, although the interval Di can be prevented from becoming too long. Besides, there is another problem that the application of the high voltage may cause the change in the electrical discharge characteristics, which may entail the increase of wire break and decline of machining accuracy during the wire electrical discharge machining.

According to a first aspect of the present invention there is provided a power supply apparatus for electrical discharge machining in an electrical discharge machining apparatus, in which a tool electrode and a workpiece are opposed to each other across a machining gap defined therebetween, voltage will be intermittently applied between the tool electrode and the workpiece to induce electrical discharge, and the workpiece will be machined by said electrical discharge, said apparatus further comprising: first timer means operable to start measuring a first time when an electrical discharge voltage starts to be applied between the tool electrode and the workpiece, second timer means operable to start measuring a second time at the end of the electrical discharge, and electrical discharge control means operable to detect the end of the measurements of preset times by said first and second timer means and to give a command to require the power supply apparatus for electrical discharge machining to start applying the next electrical discharge voltage between the tool electrode and the workpiece, the first and second timer means being operable to provide said command only when they have detected that both said preset times have terminated.

According to a second aspect of the present invention there is provided an electrical discharge machining method in which a tool electrode and a workpiece are opposed to each other across a machining gap defined therebetween, voltage is intermittently applied between the tool electrode and the workpiece to induce electrical discharge, and the workpiece is machined by said electrical discharge, first timer means start measuring a first time when an electrical discharge voltage starts to be applied between the tool electrode and the workpiece, second timer means start measuring a second time at the end of the electrical discharge, and electrical discharge control means detect the end of the measurements of preset times by said first and second timer means and give a command to require the power supply apparatus for electrical discharge machining to start applying the next electrical discharge voltage between the tool electrode and the workpiece, said command being provided only when both said preset times have terminated.

A development of the second aspect of the present invention is provided by the attached claim 5.

The next electrical discharge repetition cycle may be started after the passage of the predetermined downtime T3 if the electrical discharge delay time T1 is too long, while if the electrical discharge delay time T1 is too short, the downtime T3 maybe extended depending on the shortfall, and the next electrical discharge repetition cycle is started after the passage of the extended downtime, whereby the appropriate electrical discharge interval can be obtained.

Referring now to Fig. 1, a preferred example of the present invention will be described in detail. First timer means A is designed to start time measurement at a time point P0 when application of voltage between the electrodes is started, and finish the time measurement at a time point P3' when a first predetermined time (minimum operating time T0) is elapsed. Second timer means B is designed to start time measurement at a time point P2 when the electrical discharge time T2 is terminated, and finish the time measurement at a time point P3 when a second predetermined time (downtime T3) comes to an end. When both the timer means A and B finish the time measurement, the next electrical discharge repetition cycle T is entered.

The point of time for the entry of the electrical discharge repetition cycle T corresponds to the time point P3 in the case of Fig. 1(a) where the electrical discharge delay time T1 is relatively long. On the other hand, in the case of Fig. 1(b) where the electrical discharge delay time T1 is relatively short, the entry point corresponds to the time point P3', and, in this case, the electrical discharge downtime is extended by a margin, P3' - P3. According to the present invention, through the devices described in the foregoing, both the minimum operating time (minimum operating cycle) and the preset downtime in the electrical discharge repetition cycle can be secured, thereby preventing the electrical discharge interval from becoming too short.

A preferred example of the invention will now be described by way of example and with reference to the accompanying drawings in which:

Figs. 1 is a diagram for illustrating an example of electrical discharge interval control according to the invention;
Fig. 2 is a diagram for illustrating electrical discharge repetition cycles,
Fig. 3 is a flowchart for illustrating the electrical discharge interval control according to the examples;
Fig. 4 shows an example of an apparatus for carrying out the electrical discharge interval control according to the invention,
Fig. 5 is a time chart for electrical discharge interval control with a long electrical discharge delay time, and
Fig. 6 is a time chart for electrical discharge interval control with a short electrical discharge delay time.

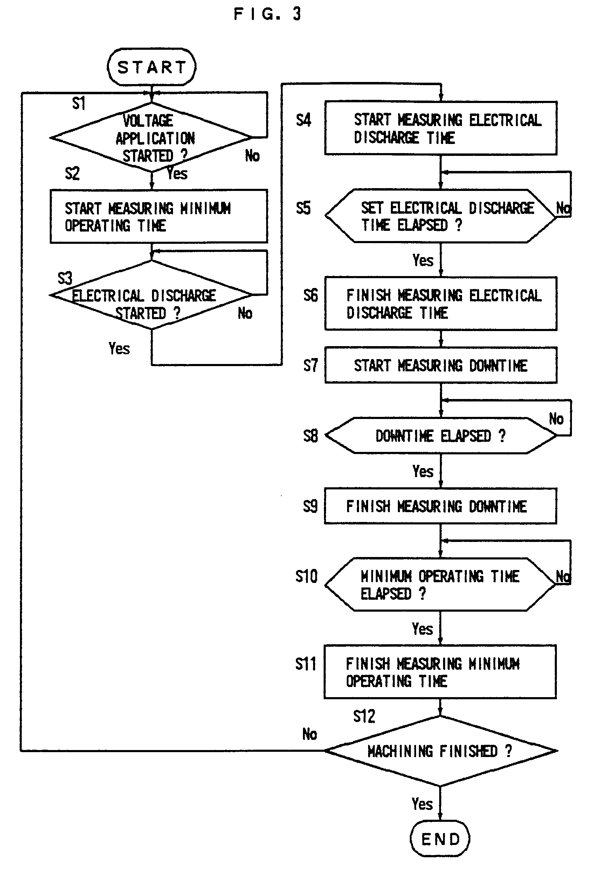

Referring now to the flowchart of Fig. 3, electrical discharge interval control to be carried out by an electrical discharge machining apparatus according to an embodiment of the invention will be described.

This process starts when a power is supplied between electrodes. When application of voltage for electrical discharge between a workpiece and an electrode (that is, between electrodes) is detected (Step S1), a timer A starts time measurement (Step S2). The voltage application between the electrodes is recognized by detecting the voltage between electrodes or a signal from a device for controlling the voltage application between electrodes.

At the point of time that the voltage application between electrodes is started, no electrical discharge is commenced yet, and no current flows between the electrodes. The electrical discharge is started after the lapse of a certain period of time, i.e., electrical discharge delay time T1, after the start of the voltage application between electrodes, as shown in Fig. 2, and a timer C starts time measurement following the detection of the start of the electrical discharge (Step S3). When the electrical discharge is started, current starts to flow between the electrodes, and at the same time, the voltage value becomes lower than a value for the electrical discharge delay time T1. Thus, the start of the electrical discharge can be recognized by detecting the current or voltage between the electrode.

Subsequently, when the timer C for measuring the lapse of time after the start of the electrical discharge finishes measuring a preset time (electrical discharge time T2) (Steps S5 and S6), the power supply is cut between electrodes lest voltage be applied between the electrodes. After the timer C is reset, a timer B starts time measurement (Step S7).

When the timer B, which measures the lapse of time after the termination of the electrical discharge, that is. the start of downtime, finishes measuring a preset time (downtime T3) (Step S8), the timer B is reset (Step S9), and it is determined whether or not the timer A has finished measuring a preset time (minimum operating time T0) by that point of time (Step S10).

If it is found the timer A has not finished the time measurement yet, the finish is awaited. If the time measurement is finished, the timer A is reset immediately (Step S11), whereupon an electrical discharge repetition cycle T for the present stage terminates. If this cycle T is not a final one, that is, if the electrical discharge machining is expected to be continued (Step S12), voltage is applied again between the electrodes for the next electrical discharge repetition cycle T, whereupon the program returns to Step S1. On the other hand, if the electrical discharge repetition cycle T concerned is the final one, the electrical discharge machining operation is finished.

According to an embodiment shown in Fig. 3, the termination of time measurement by the timer A for measuring the minimum operating time T0 is recognized (Steps S10 and S11) after first recognizing the termination of time measurement by the timer B for measuring the downtime T3 (Steps S8 and S9), whereby both the downtime T3 and the minimum operating time T0 are concluded to be over. Alternatively, the lapse of both the downtime T3 and the minimum operating time T0 can also be confirmed by confirming the termination of measurement of the downtime T3 by the timer B after first confirming the termination of the minimum operating time T0 by the timer A. In this case, the flow of processing in the order of Steps S8, S9, S10 and S11 in the flowchart of Fig. 3 is simply changed to the order of Steps S10, S11, S8 and S9, so that a further description of the processing is omitted.

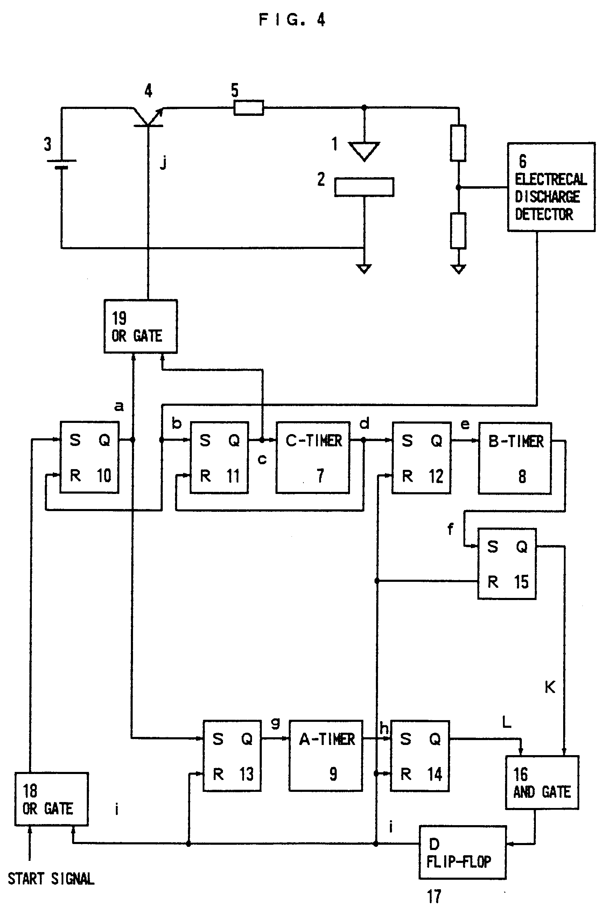

Referring now to Fig. 4, an example of an electrical discharge interval control device in the electrical discharge machining apparatus according to the invention will be described.

The workpiece 2 is machined by electrical discharge generated between a tool electrode 1 and a workpiece 2, that is between electrodes. Voltage from a DC power source 3 for machining is applied between tool electrode 1 and the workpiece 2 via a switching element 4 and a current limiting resistor 5. When the switching element 4 is turned on in response to a control signal from the electrical discharge interval control device side, a closed circuit is formed including the tool electrode 1, workpiece 2, DC power source 3 for machining, switching element 4, and current limiting resistor 5.

The interelectrode voltage, that is, voltage between the tool electrode 1 and the workpiece 2 is detected by means of an electrical discharge detector 6, whereby the start of electrical discharge between electrode is detected.

The above-described arrangement is a conventional arrangement of a power supply apparatus used in the electrical discharge machining apparatus.

The following is a description of an arrangement for controlling the electrical discharge interval. Reference numerals 7 to 9 individually denote timers which start time measurement on receiving signals, and output signals after finishing measuring a preset time. Numerals 10 to 15 individually denote RS flip-flops. Each RS flip-flop is set and delivers a signal from its output terminal Q on receiving an input to its S input terminal, and is reset so that its Q output goes low on receiving an input to its R input terminal. Numeral 16 denotes an AND gate which receives Q outputs from the RS flip-flops 14 and 15, and serves to find out the logical product of the received values. Numeral 17 denotes a D flip-flop which temporarily holds the output of the AND gate 16. Further, numerals 18 and 19 individually denote OR gates which serve to find out logical sums.

The C-, B- and A-timers 7, 8 and 9 measure the electrical discharge time T2, downtime T3, and minimum operating time T0, respectively. The timers 7, 8 and 9 correspond to the timers C, B and A, respectively, which have been described before with reference to Figures 1 and 3. The RS flip-flops 12, 14 and 15, which are connected to the respective outputs of their corresponding timers, serve to hold time measurement outputs from the timers until reset signals are inputted.

A signal for the restart of the electrical discharge machining operation, that is, a signal for the start of reapplication of voltage between the electrodes, sets the RS flip-flop 10 through the OR gate 18. When both the output (signal indicative of the lapse of the downtime T3) from the timer 8 and the output (signal indicative of the minimum operating time T0) from the timer 9 are applied to the AND gate 16 during the electrical discharge machining operation, the AND gate 16 sets the RS flip-flop 10 through the D flip-flop 17 and the OR gate 18.

When the RS flip-flop 10 is set, its Q output causes the OR gate 19 to turn on the switching element 4, through OR gate 19 whereupon power of the power source 3 is supplied between the electrodes.

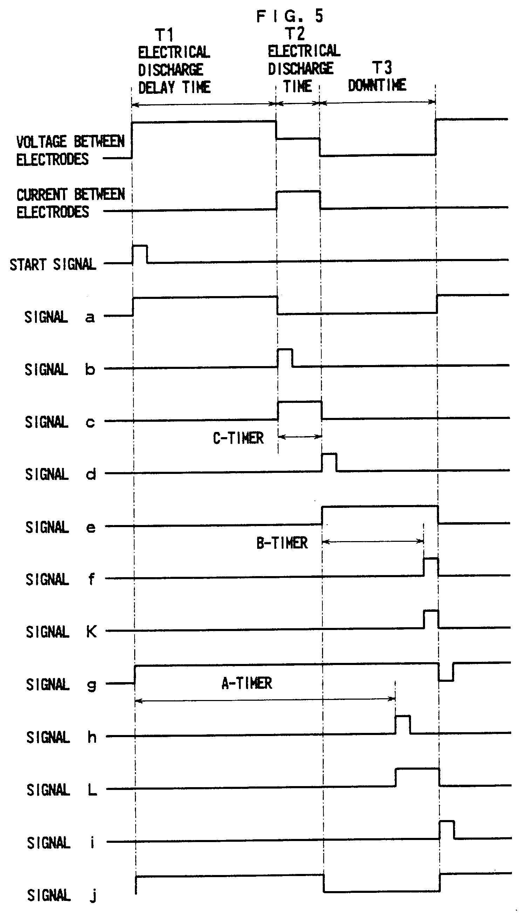

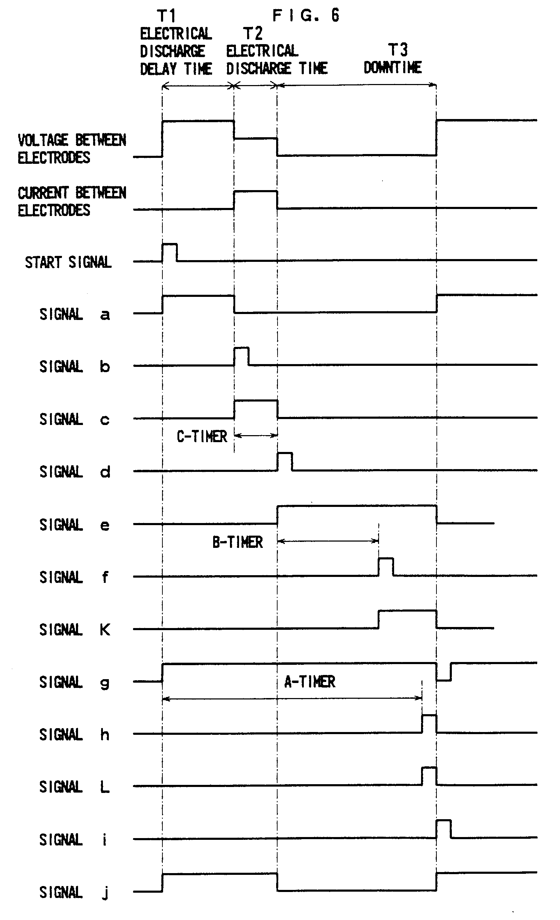

Referring now to the time charts of Figures 5 and 6, the operation of the aforementioned electrical discharge interval control device will be described. Fig. 5 is a time chart for the case where the electrical discharge delay time T1 is relatively long, as in the case shown in Fig. 1(a). In this case, the next electrical discharge repetition cycle T is entered at the end of the downtime T2. Fig. 6 is a time chart for the case where the electrical discharge delay time T1 is relatively short, as in the case shown in Fig. 1(b). In this case, the downtime T2 is extended (to the end of the minimum operating time T0), and the next electrical discharge repetition cycle T is entered after the end of the extended downtime.

In Figures 5 and 6, signals a, b, c and d are outputs from the output terminal Q of the RS flip-flop 10, the electrical discharge detector 6, the output terminal Q of the RS flip-flop 11, and the C-timer 7, respectively. Moreover, signals e, f, g and h are outputs from the output terminal Q of the RS flip-flop 12, the B-timer 8, the output terminal Q of the RS flip-flop 13, and the A-timer 9, respectively. Furthermore, signals i, j, K and L are outputs from the D flip-flop 17, the OR gate 19, the RS flip-flop 15, and the RS flip-flop 14, respectively.

Referring first to the time chart of Fig. 5, operation for the case where the electrical discharge delay time T1 is relatively long will be described.

When the OR gate 18 is supplied with an electrical discharge operation start signal or a signal for the termination of the preceding electrical discharge repetition cycle from the D flip-flop 17, the RS flip-flop 10 is set, whereupon the signal a is outputted. The signal a causes, through the OR gate 19, the drive signal j to be delivered for driving the switching element 4, thereby applying machining voltage between the electrodes.

Also, the signal a sets the RS flip-flop 13, thereby causing the A-timer 9 to start time measurement (measurement of the minimum operating time T0). When the A-timer 9 finishes measuring the time T0, it delivers the signal h, thereby setting the RS flip-flop 14. The set RS flip-flop 14 delivers the signal L to one input terminal of the AND gate 16.

After the lapse of a certain period of time (electrical discharge delay time T1) following the rise of the signal a, interelectrode electrical discharge starts. Thereupon, the electrode voltage drops from the supply voltage level to the arc voltage level. The electrical discharge detector 6 detects this voltage drop and delivers the signal b, thereby resetting the RS flip-flop 10 while setting the RS flip-flop 11. The signal falls when the RS flip-flop 10 is reset, and the signal c is outputted when the RS flip-flop 11 is set.

Since the drive signal j is an OR output obtained from the signals a and c, the signal a falls when the RS flip-flop 10 is reset. Simultaneously, however, the signal c rises, so that the drive signal j continues to be outputted.

When the signal c from the RS flip-flop 11 rises, the C-timer 7 starts time measurement (measurement of the set electrical discharge time T2). When the C-timer 7 finishes measuring the preset electrical discharge time T2, it delivers the signal d, thereby setting the RS flip-flop 12 while resetting the RS flip-flop 11. Resetting the RS flip-flop 11 causes the C-timer 7 to be reset, thereby further causing the signal c to fall, and the drive signal j to fall (since the signal a is already low). As a result, the switching element 4 is turned off to cut off machining current, whereupon the electrical discharge time T2 terminates. On the other hand, the signal e, which is outputted as the RS flip-flop 12 is set, causes the B-timer 8 to start time measurement (measurement of the downtime T3).

When the B-timer 8 finishes measuring the preset downtime T3, it delivers the signal f, thereby setting the RS flip-flop 15. The set RS flip-flop 15 applies the signal K to the one input terminal of the AND gate 16. If the electrical discharge delay time T1 is long, the minimum operating time T0 expires before the downtime T3 terminates. Thus, by the time the signal K is applied to the one input terminal of the AND gate 16, the signal L has already been applied to the other input terminal of the gate 16.

Therefore, the D flip-flop 17 is set immediately after the signal K is applied to the one input terminal of the AND gate 16. The set D flip-flop 17 delivers the signal i, thereby causing, through the OR gate 18, the RS flip-flop 10 to be set. Thereafter, the next electrical discharge repetition cycle T is entered as described previously. At the same time, the signal i from the D flip-flop 17 resets the RS flip-flop 13, thereby causing the A-timer 9, the RS flip-flop 12, and the B-timer 8 to be reset respectively.

Referring now to the time chart of Fig. 6, operation for the case where the electrical discharge delay time T1 is relatively short will be described.

The cases of Fig. 5 and Fig. 6 differ from each other in that the signal h goes high after the rise of the signal f in the case of Fig. 5, while it goes high before the rise of the signal f in the case of Fig. 6.

In the case of Fig. 5 where the electrical discharge delay time T1 is long, as mentioned before, the signal L has already been applied to the other input terminal of the AND gate 16 by the time the signal K is applied to the one input terminal of the gate 16. Therefore, the output from the AND gate 16 is delivered immediately after the entry of the signal K, while in the case where the electrical discharge delay time T1 is short, the signal L has not been applied to the other input terminal of the AND gate 16 yet by the time the signal K is applied to the one input terminal of the gate 16. Therefore, the output from the AND gate 16 is not delivered until the entry of the signal L.

Since processes after the delivery of the output from the AND gate 16 and processes before the application of the signals K and L to the gate 16 are executed in the same manner as in the case of Fig. 5, further descriptions of those processes are omitted herein.

## Claims

1. A power supply apparatus for electrical discharge machining in an electrical discharge machining apparatus in which a tool electrode (1) and a workpiece (2) are opposed to each other across a machining gap defined therebetween, voltage will be intermittently applied between the tool electrode (1) and the workpiece (2) to induce electrical discharge, and the workpiece (2) will be machined by said electrical discharge, said power supply apparatus being characterised by: first timer means (A) operable to start measuring from a first time (P0) when an electrical discharge voltage starts to be applied between the tool electrode (1) and the workpiece (2), second timer means (B) operable to start measuring from a second time (P2) at the end of the electrical discharge, and electrical discharge control means (10-19) operable to detect the end of the measurements of preset times (T0, T3) by said first and second timer means (A, B) and to give a command to require the power supply apparatus for electrical discharge machining to start applying the next electrical discharge voltage between the tool electrode (1) and the workpiece (2), the first and second timer means (A, B) being operable to provide said command only when they have detected that both said preset times (T0, T3) have terminated.

2. A power supply apparatus for electrical discharge machining in an electrical discharge machining apparatus according to Claim 1, wherein said electrical discharge control means (10-19) includes an AND circuit (16) having one input terminal to receive a predetermined time measurement end signal from said first timer means (A), and another input terminal to receive a predetermined time measurement end signal from said second timer means (B), the output of said AND circuit (16) serving as the command to start the application of the next electrical discharge voltage.

3. A power supply apparatus for electrical discharge machining in an electrical discharge machining apparatus according to Claim 1 or 2, wherein said preset time (T0) for said first timer means (A) is equivalent to the minimum value of one electrical discharge repetition cycle, said preset time (T3) for said second timer means (B) is a time which is set for cutting the power supply from the power supply apparatus between the tool electrode (1) and the workpiece (2) during the time from the end (P2) of the electrical discharge to the start of the next voltage application, and said first and second timer means (A, B) are set individually so that the time measurement (T0) by the first timer means (A) will be finished earlier than the time measurement (T3) by the second timer means (B) in the case where an electrical discharge delay time as the time interval (P0-P1) between the application of the electrical discharge voltage and the start of actual electrical discharge is relatively long, and that the time measurement (T3) by the second timer means (B) will terminate after the time measurement (T0) by the first timer means (A) is finished in case where the electrical discharge delay time (P0-P1) is relatively short.

4. An electrical discharge machining method in which a tool electrode (1) and a workpiece (2) are opposed to each other across a machining gap defined therebetween, voltage is intermittently applied between the tool electrode (1) and the workpiece (2) to induce electrical discharge, and the workpiece (2) is machined by said electrical discharge, characterised in that first timer means (A) start measuring a first time when an electrical discharge voltage starts (P0) to be applied between tool electrode (1) and the workpiece (2), second timer means (B) start measuring a second time at the end (P2) of the electrical discharge, and electrical discharge control means (10-19) detect the end of the measurements of preset times (T0, T3) by said first and second timer means (A, B) and give a command to require the power supply apparatus for electrical discharge machining to start applying the next electrical discharge voltage between the tool electrode (1) and the workpiece (2), said command being provided only when both said preset times (T0, T3) have terminated.

5. An electrical discharge machining method according to claim 4, in which an operating cycle is repeated including a step of detecting the start (P1) of electrical discharge between the tool electrode (1) and the workpiece (2) after the electrical discharge voltage is applied between them, and a step of cutting the power supply between the tool electrode (1) and the workpiece (2) from the power source of the power supply apparatus for electrical discharge machining after the passage of a predetermined time (T2) from the detection of the start (P1) of the electrical discharge between the tool electrode and the workpiece, wherein the preset value (T0) of said first time is operating time, and the preset value (T3) of said second time is a predetermined downtime from the point (P2) when power supply from the power source of the power supply apparatus for electrical discharge machining is cut between the tool electrode (1) and the workpiece (2), the next operating cycle being entered by supplying the power from the power source of the power supply apparatus for electrical discharge machining again between the tool electrode (1) and the workpiece (2), thereby applying the electrical discharge voltage between them, at the end of the measurement of said downtime (T3) in the case where the measurement of said minimum operating time (T0) is already finished by the time the measurement of said downtime (T3) is finished, or at the end of the measurement of an extended downtime (T3), which is extended to the end of the measurement of said minimum operating time (T0), in the case where the measurement of said minimum operating time (T0) is not finished yet by the time the measurement of said downtime (T3) is finished.

## Patentansprüche

1. Stromversorgungsvorrichtung für die elektrische Entladungsbearbeitung in einer elektrischen Entladungsbearbeitungsvorrichtung, in der eine Werkzeugelektrode (1) und ein Werkstück (2) einander über einen Bearbeitungsspalt, der zwischen diesen definiert ist, gegenüberliegen, Spannung intermittierend zwischen die Werkzeugelektrode (1) und das Werkstück (2) gelegt wird, um eine elektrische Entladung herbeizuführen, und das Werkstück (2) mittels der elektrischen Entladung bearbeitet wird, welche Stromversorgungsvorrichtung **gekennzeichnet** ist durch: ein erstes Zeitgebermittel (A), das betreibbar ist, um eine Messung von einem ersten Zeitpunkt (P0) an zu starten, wenn das Anlegen einer elektrischen Entladungsspannung zwischen der Werkzeugelektrode (1) und dem Werkstück (2) beginnt, ein zweites Zeitgebermittel (B), das betreibbar ist, um eine Messung von einem zweiten Zeitpunkt (P2) an am Ende der elektrischen Entladung zu starten, und ein Steuermittel (10 - 19) für die elektrische Entladung, das betreibbar ist, um das Ende der Messungen voreingestellter Zeiten (T0, T3) durch das erste und das zweite Zeitgebermittel (A, B) zu erfassen und einen Befehl zu erteilen, um von der Stromversorgungsvorrichtung für die elektrische Entladungsbearbeitung zu verlangen, das Anlegen der nächsten elektrischen Entladungsspannung zwischen der Werkzeugelektrode (1) und dem Werkstück (2) zu beginnen, wobei die ersten und zweiten Zeitgebermittel (A, B) betreibbar sind, um den Befehl nur dann zu erteilen, wenn sie erfaßt haben, daß beide der voreingestellten Zeiten (T0, T3) beendet sind.

2. Stromversorgungsvorrichtung für die elektrische Entladungsbearbeitung in einer elektrischen Entladungsbearbeitungsvorrichtung nach Anspruch 1, in der das Steuermittel (10 - 19) für die elektrische Entladung eine UND-Schaltung (16) enthält, die einen Eingangsanschluß zum Empfangen eines Messungsendesignals nach Messung der vorbestimmten Zeit von dem ersten Zeitgebermittel (A) und einen weiteren Eingangsanschluß zum Empfangen eines Messungsendesignals nach Messung der vorbestimmten Zeit von dem zweiten Zeitgebermittel (B) hat, wobei das Ausgangssignal der UND-Schaltung (16) als der Befehl dient, das Anlegen der nächsten elektrischen Entladungsspannung zu beginnen.

3. Stromversorgungsvorrichtung für die elektrische Entladungsbearbeitung in einer elektrischen Entladungsbearbeitungsvorrichtung nach Anspruch 1 oder 2, in der die voreingestellte Zeit (T0) für das erste Zeitgebermittel (A) dem Minimalwert eines Wiederholungszyklus der elektrischen Entladung äquivalent ist, die voreingestellte Zeit (T3) für das zweite Zeitgebermittel (B) eine Zeit ist, die für das Abschalten der Stromversorgung von der Stromversorgungsvorrichtung zwischen der Werkzeugelektrode (1) und dem Werkstück (2) während der Zeit von dem Ende (P2) der elektrischen Entladung bis zum Beginn des nächsten Anlegens der Spannung eingestellt ist, und die ersten und zweiten Zeitgebermittel (A, B) derart individuell eingestellt sind, daß die Messung der Zeit (T0) durch das erste Zeitgebermittel (A) früher als die Messung der Zeit (T3) durch das zweite Zeitgebermittel (B) in dem Fall beendet wird, in dem eine Verzögerungszeit der elektrischen Entladung als das Zeitintervall (P0 - P1) zwischen dem Anlegen der elektrischen Entladungsspannung und dem Beginn der tatsächlichen elektrischen Entladung relativ lang ist, und daß die Messung der Zeit (T3) durch das zweite Zeitgebermittel (B), nachdem die Messung der Zeit (T0) durch das erste Zeitgebermittel (A) beendet ist, in dem Fall enden wird, in dem die Verzögerungszeit (P0 - P1) der elektrischen Entladung relativ kurz ist.

4. Verfahren zur elektrischen Entladungsbearbeitung, wobei eine Werkzeugelektrode (1) und ein Werkstück (2) einander über einen Bearbeitungsspalt, der zwischen diesen definiert ist, gegenüberliegen, Spannung intermittierend zwischen die Werkzeugelektrode (1) und das Werkstück (2) gelegt wird, um eine elektrische Entladung herbeizuführen, und das Werkstück (2) mittels der elektrischen Entladung bearbeitet wird, dadurch **gekennzeichnet,** daß ein erstes Zeitgebermittel (A) die Messung einer ersten Zeit startet, wenn das Anlegen einer elektrischen Entladungsspannung zwischen der Werkzeugelektrode (1) und dem Werkstück (2) beginnt (P0), ein zweites Zeitgebermittel (B) die Messung einer zweiten Zeit am Ende (P2) der elektrischen Entladung startet und Steuermittel (10 - 19) für die elektrische Entladung das Ende der Messungen von voreingestellten Zeiten (T0, T3) durch die ersten und zweiten Zeitgebermittel (A, B) erfassen und einen Befehl erteilen, um von der Stromversorgungsvorrichtung für die elektrische Entladungsbearbeitung zu verlangen, das Anlegen der nächsten elektrischen Entladungsspannung zwischen der Werkzeugelektrode (1) und dem Werkstück (2) zu beginnen, wobei der Befehl nur dann erteilt wird, wenn beide der voreingestellten Zeiten (T0, T3) beendet sind.

5. Verfahren zur elektrischen Entladungsbearbeitung nach Anspruch 4, bei dem ein Arbeitszyklus wiederholt wird, der einen Schritt zum Erfassen des Beginns (P1) der elektrischen Entladung zwischen der Werkzeugelektrode (1) und dem Werkstück (2), nachdem die elektrische Entladungsspannung zwischen diese gelegt ist, und einen Schritt zum Abschalten der Stromversorgung zwischen der Werkzeugelektrode (1) und dem Werkstück (2) von der Stromquelle der Stromversorgungsvorrichtung für die elektrische Entladungsbearbeitung nach dem Ablauf einer vorbestimmten Zeit (T2) von der Erfassung des Beginns (P1) der elektrischen Entladung zwischen der Werkzeugelektrode und dem Werkstück an enthält, wobei der voreingestellte Wert (T0) der ersten Zeit eine vorbestimmte minimale Arbeitszeit ist und der voreingestellte Wert (T3) der zweiten Zeit eine vorbestimmte Abschaltzeit von dem Zeitpunkt (P2) an ist, zu dem die Stromversorgung von der Stromquelle der Stromversorgungsvorrichtung für die elektrische Entladungsbearbeitung zwischen der Werkzeugelektrode (1) und dem Werkstück (2) abgeschaltet wird, und wobei in den nächsten Arbeitszyklus durch erneutes Zuführen des Stroms von der Stromquelle der Stromversorgungsvorrichtung für die elektrische Entladungsbearbeitung zwischen der Werkzeugelektrode (1) und dem Werkstück (2) eingetreten wird, um dadurch zwischen diese am Ende der Messung der Abschaltzeit (T3) in dem Fall, in dem die Messung der minimalen Arbeitszeit (T0) bereits durch die Zeit, in der die Messung der Abschaltzeit (T3) beendet wird, beendet ist, oder am Ende der Messung einer verlängerten Abschaltzeit (T3), die bis zum Ende der Messung der minimalen Arbeitszeit (T0) verlängert ist, in dem Fall, in dem die Messung der minimalen Arbeitszeit (T0) noch nicht durch die Zeit der Messung der Abschaltzeit (T3) beendet wird, beendet ist, die elektrische Entladungsspannung zu legen.

**Revendications**

1. Appareil d'alimentation en courant pour l'usinage par étincelage dans un appareil d'usinage par étincelage, dans lequel une électrode d'usinage (1) et une pièce à usiner (2) sont opposées l'une à l'autre à travers un espace libre d'usinage défini entre elles, une tension sera appliquée par intermittence entre l'électrode d'usinage (1) et la pièce à usiner (2) pour induire une décharge électrique, et la pièce à usiner (2) sera usinée par ladite décharge électrique, ledit appareil d'alimentation en courant étant caractérisé par: un premier moyen d'horloge (A) qui peut être mis en service pour déclencher une mesure à partir d'un premier temps (P0) lorsqu'une tension d'étincelage est déclenchée pour être appliquée entre l'électrode d'usinage (1) et la pièce à usiner (2); un second moyen d'horloge (B) qui peut être mis en service pour déclencher une mesure à partir d'un second temps (P2) à la fin de la décharge électrique; et un moyen de réglage de l'étincelage (10-19) qui peut être mis en service pour détecter la fin de la mesure des temps prédéterminés (T0, T3) par lesdits premier et second moyens d'horloge (A, B) et pour donner un ordre demandant à l'appareil d'alimentation en courant pour l'usinage par étincelage de déclencher l'application de la tension d'étincelage suivante entre l'électrode d'usinage (1) et la pièce à usiner (2), les premier et second moyens d'horloge (A, B) pouvant être mis en service pour donner ledit ordre uniquement lorsqu'ils ont détecté la fin desdits deux temps préréglés (T0, T3).

2. Appareil d'alimentation en courant pour l'usinage par étincelage dans un appareil d'usinage par étincelage selon la revendication 1, dans lequel ledit moyen de commande d'étincelage (10-19) englobe un circuit AND (16) possédant une borne d'entrée destinée à recevoir un signal de fin de mesure de temps prédéterminé provenant dudit premier moyen d'horloge (A) et une autre borne d'entrée pour recevoir un signal de fin de mesure de temps prédéterminé provenant dudit second moyen d'horloge (B), la sortie dudit circuit AND (16) faisant office de commande pour déclencher l'application de la tension d'étincelage suivante.

3. Appareil d'alimentation en courant pour l'usinage par étincelage dans un appareil d'usinage par étincelage selon la revendication 1 ou 2, dans lequel ledit temps préréglé (T0) pour ledit premier moyen d'horloge (A) est équivalent à la valeur minimale d'un cycle de répétition d'étincelage, ledit temps préréglé (T3) pour ledit second moyen d'horloge (B) est un temps qui est réglé pour couper l'alimentation en courant depuis l'appareil d'alimentation en courant entre l'électrode d'usinage (1) et la pièce à usiner (2) au cours du temps s'écoulant entre la fin (P2) de la décharge électrique et le début de l'application de la tension suivante, lesdits premier et second moyens d'horloge (A, B) étant réglés de manière individuelle, si bien que la mesure de temps (T0) par le premier moyen d'horloge (A) se terminera plus tôt que la mesure de temps (T3) par le second moyen d'horloge (B) dans le cas où un temps de retard d'étincelage à titre d'intervalle de temps (P0-P1) entre l'application de la tension d'étincelage et le début de l'étincelage proprement dit est relativement long et de telle sorte que la mesure de temps (T3) par le second moyen d'horloge (B) se terminera après la fin de la mesure de temps (T0) par le premier moyen d'horloge (A) dans le cas où le temps de retard (P0-P1) est relativement court.

4. Procédé d'usinage par étincelage dans lequel une électrode d'usinage (1) et une pièce à usiner (2) sont opposées l'une à l'autre à travers un espace libre d'usinage défini entre elles, une tension est appliquée par intermittence entre l'électrode d'usinage (1) et la pièce à usiner (2) pour induire une décharge électrique, et la pièce à usiner (2) est usinée par ladite décharge électrique, caractérisé en ce qu'un premier moyen d'horloge (A) déclenche la mesure d'un premier temps correspondant au début (P0) d'une tension d'étincelage à appliquer entre l'électrode d'usinage (1) et la pièce à usiner (2), un second moyen d'horloge (B) déclenche la mesure d'un second temps correspondant à la fin (P2) de la décharge électrique, et un moyen de commande d'étincelage (10-19) détecte la fin des mesures des temps préréglés (T0, T3) par lesdits premier et second moyens d'horloge (A, B) et donne un ordre pour demander à l'appareil d'alimentation en courant pour l'usinage par étincelage de déclencher l'application de la tension d'étincelage suivante entre l'électrode d'usinage (1) et la pièce à usiner (2), ledit ordre étant donné uniquement après la fin des deux temps préréglés (T0, T3) ont abouti.

5. Procédé d'usinage par étincelage selon la revendication 4, dans lequel on répète un cycle de travail, englobant une étape consistant à détecter le déclenchement (P1) d'une décharge électrique entre l'électrode d'usinage (1) et la pièce à usiner (2) après application de la tension d'étincelage entre elles, et une étape consistant à couper l'alimentation en courant entre l'électrode d'usinage (1) et la pièce à usiner (2) à partir de la source de courant de l'appareil d'alimentation en courant pour l'usinage par étincelage après l'écoulement d'un temps prédéterminé (T2) depuis la détection du début (T1) de la décharge électrique entre l'électrode d'usinage et la pièce à usiner, dans lequel la valeur préréglée (T0) dudit premier temps est un temps de travail minimal prédéterminé et la valeur préréglée (T3) dudit second temps est un temps de repos prédéterminé à partir du temps (P2) lorsque l'alimentation en courant à partir de la source de courant de l'appareil d'alimentation en courant pour l'usinage par étincelage est coupée entre l'électrode d'usinage (1) et la pièce à usiner (2), le cycle de travail suivant étant déclenché en alimentant à nouveau le courant à partir de la source de courant de l'appareil d'alimentation en courant pour l'usinage par étincelage entre l'électrode d'usinage (1) et la pièce à usiner (2), en appliquant ainsi la tension d'étincelage entre elles, à la fin de la mesure dudit temps de repos (T3), dans le cas où la mesure dudit temps de travail minimal (T0) est déjà terminée lorsque la mesure dudit temps de repos (T3) est terminée, ou à la fin de la mesure d'un temps de repos prolongé (T3), qui s'étend depuis la fin de la mesure dudit temps de travail minimal (T0), dans le cas où la mesure dudit temps de travail minimal (T0) n'est pas encore terminée lorsque la mesure dudit temps de repos (T3) est terminée.

F I G. 1

(a)

P0　　　P1　　　　　　　P2　　　　　　　　P3

|← T1 →|←　　T2　　→|←　　T3　　→|

|←　　　　　　　T0　　　　　　　→|　　↘ P3´

|←　　　　　　　　T　　　　　　　　→|

(b)

P0　P1　　　　　P2　　　　　　P3 P3´

|←T1→|←　T2　→|←　　T3　　→|

|←　　　　　T0　　　　　→|

|←　　　　　　T　　　　　→|

F I G. 2

T1　　　　　　T1

　　T2　　T3　　　T2

VOLTAGE
(V)

|←　　Di　　→|

T2　T3+T1　　T2

CURRENT
(I)

10

FIG. 3

```
              ┌─────────┐
              │  START  │
              └─────────┘
                   │
         S1    ┌───────────────┐
           ╱───│   VOLTAGE     │───╲
          ╱    │ APPLICATION   │    ╲  No
          ╲    │  STARTED ?    │    ╱
           ╲───└───────────────┘───╱
         S2      │ Yes
        ┌──────────────────────┐
        │ START MEASURING MINIMUM │
        │ OPERATING TIME          │
        └──────────────────────┘
                   │
         S3    ┌───────────────┐
           ╱───│ ELECTRICAL    │───╲
          ╱    │  DISCHARGE    │    ╲  No
          ╲    │  STARTED ?    │    ╱
           ╲───└───────────────┘───╱
               │ Yes
```

S4  START MEASURING ELECTRICAL DISCHARGE TIME

S5  SET ELECTRICAL DISCHARGE TIME ELAPSED ?  No

Yes

S6  FINISH MEASURING ELECTRICAL DISCHARGE TIME

S7  START MEASURING DOWNTIME

S8  DOWNTIME ELAPSED ?  No

Yes

S9  FINISH MEASURING DOWNTIME

S10  MINIMUM OPERATING TIME ELAPSED ?  No

Yes

S11  FINISH MEASURING MINIMUM OPERATING TIME

S12  MACHINING FINISHED ?  No

Yes

END

F I G. 4

F I G. 5

EP 0 696 488 B1

FIG. 6

T1 ELECTRICAL DISCHARGE DELAY TIME

T2 ELECTRICAL DISCHARGE TIME

T3 DOWNTIME

VOLTAGE BETWEEN ELECTRODES

CURRENT BETWEEN ELECTRODES

START SIGNAL

SIGNAL a

SIGNAL b

SIGNAL c

C-TIMER

SIGNAL d

SIGNAL e

B-TIMER

SIGNAL f

SIGNAL K

SIGNAL g

A-TIMER

SIGNAL h

SIGNAL L

SIGNAL i

SIGNAL j